# FASCICULE DE BREVET EUROPEEN

(11) **EP 0 481 414 B1**
(45) Date de publication et mention de la délivrance du brevet: **14.09.1994**
(21) Numéro de dépôt: 91117511.5
(22) Date de dépôt: 14.10.1991
(51) Int. Cl.: G01M 3/20, G01M 3/02

(54) **Détecteur de fuite à gaz traçeur**
Leckdetektor mit Spürgas
Leak detection using tracer gas

(30) Priorité: 15.10.1990 FR 9012676
(43) Date de publication de la demande: 22.04.1992
(73) Titulaire: ALCATEL CIT, 75008 Paris (FR)
(72) Inventeur: Baret, Gilles, F-74000 Annecy (FR)
(74) Mandataire: Weinmiller, Jürgen

(56) Documents cités:
- EP-A- 0 268 777
- EP-A- 0 330 175
- DE-A- 2 016 076
- US-A- 3 948 083
- US-A- 4 051 715
- SOVIET INVENTIONS ILLUSTRATED, Derwent Publications Ltd., Section Physique, semaine 8613, abrégé no. 087012, S02, 12 avril 1986; & SU-A-1177707
- SOVIET INVENTIONS ILLUSTRATED, Derwent Publications Ltd., Section Physique, semaine 9018, abrégé no. 138338, S02, 13 juin 1990; & SU-A-1516814

## Description

La présente invention concerne un détecteur de fuite à gaz traçeur.

Dans un détecteur de fuite, les conduites qui relient les divers éléments n'ont pas toutes le même diamètre.

En particulier, la ou les conduites qui relient l'enceinte à contrôler au groupe de pompage secondaire, ont un plus gros diamètre que, par exemple, la conduite qui relie le groupe de pompage primaire au groupe de pompage secondaire. Dans un détecteur dont le fonctionnement est automatique, il s'en suit que les vannes situées sur ces différentes conduites n'ont pas le même diamètre de passage.
Autant pour les conduites de petite conductance, pour lesquelles le diamètre interne est inférieur à 10 mm, les vannes électromagnétiques sont relativement peu onéreuses et de petit encombrement autant, au contraire, sur les conduites de grande conductance, dont le diamètre interne est, par exemple, de 16 à 40 mm selon les cas, les vannes électromagnétiques sont encombrantes et coûteuses.

Dans les détecteurs portables, on utilise cependant des vannes électromagnétiques sur toutes les conduites, en revanche dans les détecteurs sur console, pour les grosses vannes, il est connu d'utiliser des vannes pneumatiques qui sont actionnées par un compresseur ou un dépresseur d'air inclus dans le détecteur lui-même.

Cependant une telle solution n'est guère applicable aux détecteurs portables à cause de l'augmentation du volume et du poids qui en résulte ainsi que de l'augmentation du coût et de la consommation d'énergie.

L'invention a donc pour but de proposer une solution à ce problème et s'applique en particulier, bien que non nécessairement, aux détecteurs portables.

L'invention a ainsi pour objet un détecteur de fuite à gaz traçeur comprenant un groupe de pompage secondaire, un groupe de pompage primaire unique, un spectromètre de masse relié à l'aspiration du groupe de pompage secondaire, le refoulement du groupe de pompage secondaire étant relié à l'aspiration du groupe de pompage primaire au moyen d'une conduite équipée d'une vanne électromagnétique, et au moins une canalisation reliant une bride, pour le raccordement à une enceinte à contrôler, au groupe de pompage secondaire, ladite canalisation étant équipée d'une vanne pneumatique dont l'ouverture fonctionne à la dépression, caractérisé en ce qu'un volume tampon est relié, d'une part à une entrée d'aspiration du groupe de pompage primaire, par une conduite de liaison munie d'une première vanne actionnée électriquement, et d'autre part à ladite vanne pneumatique, par une conduite de commande équipée d'une seconde vanne actionnée électriquement.

Selon une réalisation préférée, ledit groupe de pompage primaire comporte deux étages en série, ladite conduite de liaison étant reliée audit groupe de pompage primaire entre les deux dits étages.

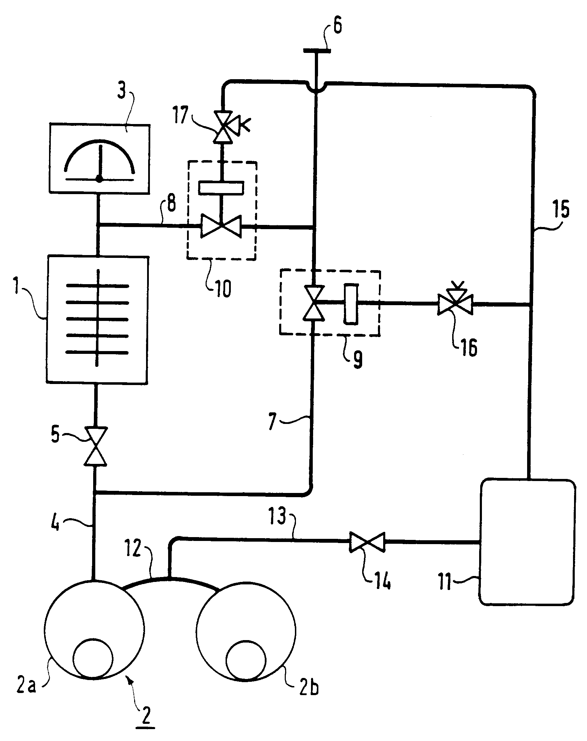

On va maintenant donner la description d'un exemple de mise en oeuvre de l'invention en se référant au dessin annexé comprenant une figure unique.

La figure représente un détecteur de fuite à gaz traçeur. Il comprend un groupe de pompage secondaire 1, par exemple un groupe mécanique moléculaire, un groupe de pompage primaire 2 constitué dans le cas présent de deux étages 2a et 2b reliés en série, et un spectromètre de masse 3.

Le groupe de pompage secondaire 1 est relié au groupe de pompage primaire 2 par une conduite 4 équipée d'une vanne électromagnétique 5. En effet, cette conduite peut avoir une conductance relativement faible, son diamètre interne étant par exemple inférieur à 10 mm.

Le détecteur comporte encore une bride d'entrée 6 destinée à être connectée à une enceinte à contrôler, reliée au groupe de pompage secondaire 1 par une première canalisation 7, au refoulement du groupe de pompage et par une seconde canalisation 8, à l'aspiration du groupe de pompage. Ces canalisations sont équipées de vannes pneumatiques 9 et 10 dont l'ouverture fonctionne à la dépression. Le détecteur décrit comporte deux canalisations 7 et 8 et permet d'effectuer un essai de contrôle d'étanchéité, soit en passage à contre-courant de l'hélium par la canalisation 7, soit en passage direct par la canalisation 8. L'invention s'applique bien évidemment, également, dans le cas où le détecteur ne possède qu'une seule canalisation 7 ou 8 ne permettant d'effectuer une mesure qu'en contre-courant ou bien uniquement en passage direct. Ces canalisations sont des canalisations ayant une grande conductance, leur diamètre interne pouvant aller par exemple jusqu'à 40 mm et ayant par exemple au moins 16 mm. Pour de tels diamètres, des vannes électromagnétiques sont coûteuses et encombrantes. On utilise donc des vannes pneumatiques.

Conformément à l'invention, pour commander l'ouverture de ces vannes, le détecteur comporte un volume tampon 11 dont la capacité est par exemple de l'ordre du litre. Le volume tampon 11 est relié au groupe de pompage primaire 2 à une entrée d'aspiration, en l'occurence à l'aspiration 12 de l'étage 2b, par une conduite de liaison 13 munie d'une première vanne 14 actionnée électriquement. Le volume tampon 11 est en outre relié, par une conduite de commande 15 aux vannes pneumatiques 9 et 10. Une vanne, actionnée électriquement, permet d'isoler le volume tampon 11 de chacune des vannes pneumatiques 9 et 10 : vanne trois voies 16 pour piloter la vanne pneumatique 9 et vanne trois voies 17 pour piloter la vanne pneumatique 10. Les conduites de liaison 13 et de commande 15 sont des conduites servant à la commande et sont donc de petit diamètre, de l'ordre de 6 mm. La vanne d'isolement 14 et les vannes trois voies 16 et 17 de pilotage sont donc de petites vannes à actionnement électrique, peu encombrantes, peu coûteuses, fiables et peu gourmandes en énergie électrique.

Ainsi, à partir de l'unique groupe de pompage primaire 2 on utilise la dépression fournie par l'étage haute pression 2b pour vider le volume tampon 11 qui sert de "réserve de vide" pour l'actionnement à l'ouverture des vannes pneumatiques 9 et 10.

Le volume tampon 11 est vidé lorsque l'appareil n'est pas en train d'effectuer un cycle de détection de fuite. Lorsque le détecteur effectue un cycle de prévidage, la vanne 14 est fermée afin d'éviter que la pression ne remonte dans le volume tampon. Pendant toutes les autres opérations, la vanne 14 reste ouverte.

## Revendications

1. Détecteur de fuite à gaz traçeur comprenant un groupe de pompage secondaire (1), un groupe de pompage primaire unique (2), un spectromètre de masse (3) relié à l'aspiration du groupe de pompage secondaire, le refoulement du groupe de pompage secondaire étant relié à l'aspiration du groupe de pompage primaire au moyen d'une conduite (4) équipée d'une vanne électromagnétique (5), et au moins une canalisation (7, 8) reliant une bride (6) pour le raccordement à une enceinte à contrôler, au groupe de pompage secondaire (1), ladite canalisation étant équipée d'une vanne pneumatique (9, 10) dont l'ouverture fonctionne à la dépression, caractérisé en ce qu'un volume tampon (11) est relié, d'une part à une entrée d'aspiration (12) du groupe de pompage primaire (2), par une conduite de liaison (13) munie d'une première vanne (14) actionnée électriquement, et d'autre part à ladite vanne pneumatique (9, 10), par une conduite de commande (15) équipée d'une seconde vanne (16, 17) actionnée électriquement.

2. Détecteur de fuite selon la revendication 1, caractérisé en ce que ledit groupe de pompage primaire comporte des étages (2a, 2b) disposés en série, ladite conduite de liaison (13) étant reliée audit groupe de pompage primaire (2) entre les des dits étages.

## Claims

1. A tracer-gas leak detector including a secondary pumping set (1), a sole primary pumping set (2), a mass spectrometer (3) connected to the inlet of the secondary pumping set, the outlet of the secondary pumping set being connected to the inlet of the primary pumping set by means of a duct (4) equipped with an electromagnetic valve (5), and at least one pipe (7, 8) connecting a coupling (6) for connection to an enclosure to be tested to the secondary pumping set (1), said pipe being equipped with a pneumatic valve (9, 10) which is opened by suction, said leak detector being characterized in that a buffer volume (11) is connected both to a suction inlet (12) of the primary pumping set (2) by a link duct (13) equipped with a first electrically actuated valve (14), and also to said pneumatic valve (9, 10) by a control duct (15) equipped with a second electrically actuated valve (16, 17).

2. A leak detector according to claim 1, characterized in that said primary pumping set comprises two stages (2a, 2b) disposed in series, said link duct (13) being connected to said primary pumping set (2) between said two stages.

## Patentansprüche

1. Spürgas-Leckdetektor mit einer Hochvakuumpumpe (1), einer einzigen Vorpumpe (2), einem Massenspektrometer (3), das an die Saugseite der Hochvakuumpumpe angeschlossen ist, wobei der Auslaß der Hochvakuumpumpe an die Saugseite der Vorpumpe über eine mit einem elektromagnetischen Ventil (5) versehene Leitung angeschlossen ist, und mit mindestens einer Leitung (7, 8), die einen Flansch (6) zum Anschluß eines zu testenden Gefäßes mit der Hochvakuumpumpe (1) verbindet, wobei diese Leitung ein pneumatisches Ventil (9, 10) enthält, das durch Unterdruck geöffnet wird, dadurch gekennzeichnet, daß ein Puffervolumen (11) einerseits an einen Saugeingang (12) der Vorpumpe (2) über eine ein erstes elektrisch betätigtes Ventil (14) enthaltende Verbindungsleitung (13) und andererseits über eine ein zweites elektrisch betätigtes Ventil (16, 17) enthaltende Steuerleitung (15) an das pneumatische Ventil (9, 10) angeschlossen ist.

2. Leckdetektor nach Anspruch 1, dadurch gekennzeichnet, daß die Vorpumpe aus zwei Stufen (2a, 2b) in Reihe besteht und daß die Verbindungsleitung (13) zwischen diesen beiden Stufen an die Vorpumpe (2) angeschlossen ist.
